Europäisches Patentamt

European Patent Office

Office européen des brevets

(11) Publication number: **0 174 396**
A1

# EUROPEAN PATENT APPLICATION

(21) Application number: 84201310.4

(22) Date of filing: 11.09.84

(51) Int. Cl.⁴: **B 62 D 33/06**

(43) Date of publication of application:
19.03.86 Bulletin 86/12

(84) Designated Contracting States:
DE FR GB IT NL SE

(71) Applicant: **Applied Power Inc.**
250 South Executive Drive
Brookfield Wisconsin 53005(US)

(72) Inventor: Sonneborn, Lambertus Johannes
Waterhamskamp 15
NL-7576 EM Oldenzaal(NL)

(74) Representative: Boelsma, Gerben Harm, Ir. et al,
Octrooibureau Polak & Charlouis Laan Copes van
Cattenburch 80
NL-2585 GD Den Haag(NL)

(54) A device for controlling the tilting movement of a driver's cab on a vehicle.

(57) This invention relates to an hydraulic piston-cylinder device (1) adapted for tilting the driver's cab of a truck. According to the invention a relief duct (8a) is connected to at least one of the ducts (5,7) which connect the opposite ends of the piston-cylinder device to the control valve (4a), said duct being the one which is connected with the hydraulic pump (3) when the control valve (4a) is in its tilting position, a valve (9) in said relief duct cooperating with means adapted to sense the position of the gear box and/or the praking brake, in such a way, that said valve will be closed only in one or more selected positions of the gear box and/or when the parking brake is in a determined position. The features just referred to constitute a safeguard against the initiation of tilting movements which would be dangerous in certain situations and consequently should be avoided.

FIG. 1

Title of invention: A device for controlling the tilting movement of a driver's cab on a vehicle.

The invention relates to a device for controlling the tilting movement of a driver's cab on a vehicle, comprising a hydraulic circuit including a source of hydraulic fluid, hydraulic pump means, a hydraulic control valve and at least one hydraulic piston, cylinder device, the latter having its ends pivotally connected to the driver's cab and the vehicle chassis respectively.

Such devices are commonly known. With such devices the pump means may be either a manually actuated pump or a power driven, e.g. an electrically driven pump. Usually a type of hydraulic control valve is used, which may be manually and selectively set in a "tilting position" or a "driving position". Examples of such devices are disclosed in US-A-3.472.547 and GB-A-1.447.673.

The invention aims at improving a device of the type above referred to in the sense, that the tilting system will be secure against the initiation of tilting movements which would be dangerous in certain situations and consequently should be avoided. As an example of this reference may be made to the situation, in which the gear box of the vehicle is taking one of its operative positions while the engine is turned off, and also to the situation, in which the parking brake of a stationary vehicle is left in its released position. In both of these situations the tilting of the driver's cab from the driving position can be dangerous, e.g. if one would activate the start motor in case of the gear box being in an operative position or - in said second situation - when the vehicle would get into motion in case the driver has omitted to pull the parking brake.

In accordance with advantageous features of the present invention, a relief duct is connected to at least one of the ducts which connect the opposite ends of the piston-cylinder device to the control valve, said duct being the one which is connected with the hydraulic pump when the control valve is in its tilting position, a valve in said relief duct cooperating with means adapted to sense the position of the gear box and/or the parking brake, in such a way, that said valve will be closed only in one or more selected positions of the gear box and/or when the parking brake is in a determined position.

It will be clear that, as long as the valve in the relief duct is open - due to the gear box and/or the parking brake being still in a position which does not allow the tilting of the driver's cab, no hydraulic pressure can be built up in the concerning feed duct to the piston-cylinder device, because the hydraulic fluid supplied by the pump will be simply discharged through the open relief duct. It is remarked, that US-A-4.440.252 discloses a device of a well-known type above referred to, in which the opposite ends of the cylinder are connected by a duct in which an auxiliary valve is provided which is normally open to prevent a tilting motion and which can be closed only by means of a key-activated electromagnet to permit the tilting device to be actuated. Although such an auxiliary valve is acting as a safeguard against tilting of the cab by unauthorized persons, it does not provide effective safeguard against tilting by authorized personnel in danger involving situations, as aimed at by the present invention.

It will be understood, that the device according to the invention not only provides a safeguard against tilting in danger involving situations, but may provide for safeguarding against activation of the tilting device by unauthorized persons as well.

The invention will be hereinafter further described with reference to the accompanying drawings which show, for the purpose of illustration only, three embodiments according with the present invention. In the drawings:

Fig. 1 is a schematic view of the cab-tilting device designed according to the invention, with the hydraulic components put together in a so-called "regenerative" circuit;

fig. 2 is a similar schematic view of the tilting device according to the present invention, with the hydraulic components being put together in the conventional way;

fig. 3 shows a schematic view similar to that of fig. 2, but with an alternative arrangement of the auxiliary valve in the relief duct and

fig. 4 is a sectional view of the gear switch mechanism of a gear box, with the auxiliary valve mounted on top of the housing of the same.

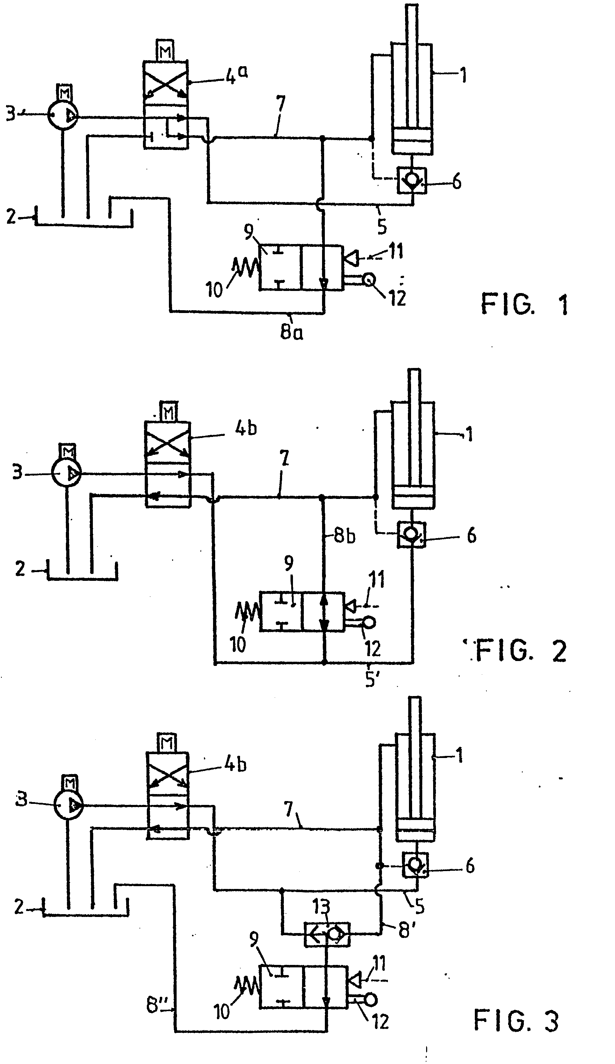

In fig. 1-3 a hydraulic piston cylinder device is designated at 1 and is adapted to tilt and return a driver's cab (not shown) from and into its driving position respectively. The projecting piston rod end is to be pivotally connected to the cab, while the bottom end of the cylinder is to be pivotally connected to the frame of the truck carrying the cab. In this connection reference may be made to the patent specifications referred to hereinabove. A source of hydraulic fluid and a e.g. manually or electrically driven pump for the hydraulic fluid are indicated at 2 and 3 respectively. In the example of Fig. 1 a manually operated control valve 4a is used of such a design, that in the tilting position (shown in the drawing) of said control valve the pump 3 - when activated - will supply hydraulic fluid to the cylinder spaces both under and above the piston. This is characteristic for what is called a "regenerative" circuiting of the hydraulic components. In this case the tilting force is proportional to the difference between the effective piston areas on the bottom side and the piston rod side of the piston respectively. In the field of the cab-tilting devices such a regenerative system is a well-known alternative for the conventional way of circuiting used in the example of Fig. 2 and 3. In the examples of Fig. 2 and 3 the control valve 4b - when in its tilting position shown in the drawings - connects the bottom end of the piston-cylinder device 1 with the pump and connects the upper or piston rod end of said device with the hydraulic fluid reservoir 2. In the return position of the valve 4a and 4b respectively there is no difference in operation between the various examples. In that position the cylinder space above the piston is connected with the pump 3, while the cylinder space under the piston is connected with the hydraulic fluid reservoir 2.

In each of the examples of Fig. 1-3 a pilot operated check valve 6 is provided in the duct 5 which connects the bottom end of the hydraulic cylinder 1 to the control valve 4a and 4b respectively. For the purpose and way of functioning of said valve 6 reference may be made to the patent specifications referred to hereinabove.

Turning now to the features of the invention, Fig. 1 shows a relief duct 8a which connects the fluid reservoir 2 to the connecting duct 7 between the control valve 4a and the piston rod end of the hydraulic cylinder 1. An auxiliary valve 9 is provided in said relief duct 8a and tends to move from the left to the right (when seen in the drawing) into its closed position under the influence of a spring 10. In said closed position the auxiliary valve 9 does not interfere with the normal operation of the tilting device. The auxiliary valve 9 may be shifted, against the action of the spring 10, from its normally closed position into the open position shown in the drawing by applying an external force ending to move the auxiliary valve to the left when seen in Fig. 1. Such a force may be generated in various ways. In the examples shown in the drawings the reference number 11 represents a valve shifting signal of pneumatic nature, while 12 represents a mechanical valve shifting signal.

It will be understood that as long as at least one of the signals 11 and 12 has a positive value, the spring 10 will not be permitted to close the auxiliary valve 9. Hydraulic fluid, delivered by the pump (while the control valve 4a is in its tilting position shown in Fig. 1) will then be discharged through the relief duct 7 via the open auxiliary valve 9 to the reservoir. A positive value of either of the signals 11 and 12 may thus be considered as representative for a situation in which a tilting movement of the driver's cab would be dangerous.

In the example of Fig. 2 the relief duct 7 interconnects the ducts 7 and 5. Also in this example a positive value of any of the signals 11 and 12 will keep the auxiliary valve 9 open and it will be understood that in this case a tilting movement from the driving position will be prevented due to the fact that any fluid delivered by the pump (in the position shown in Fig. 2) will be discharged through duct 5, via the open auxiliary valve 9 and the duct 7 towards the reservoir 2.

In the example of Fig. 3, which shows an alternative for the auxiliary valve arrangement of Fig. 2, the relief duct according to the present invention comprises two sections. One section 8' interconnects the ducts 7 and 5. A shuttle valve 13 is provided in the duct section 8' which, in the absence of the auxiliary valve 9 or in the closed position of the latter - does not influence the normal tilting or returning action of the tilting device. In such situation the shuttle 13 in fact acts as a shut-off valve. As soon as the auxiliary valve 9 is opened or as long as said valve is in its opened position, due to either of the signals 11 and 12 having a positive value, indicative of a dangerous situation, no tilting or returning procedure can take place. It will be understood that in that situation the shuttle valve 13 no longer functions as a two-directional check valve, so that any fluid delivered by the pump to either end of the hydraulic cylinder will be discharged via the shuttle valve 13 through the opened auxiliary valve 9 towards the reservoir 2.

Although the example according to Fig. 3 requires the use of a shuttle valve 13 as an additional element, it has some advantage in comparison with the example of Fig. 2. In this connection it should be taken into consideration, that the auxiliary valve 9 has to be provided at a location adjacent the location where the signals 11 and 12 are being produced.

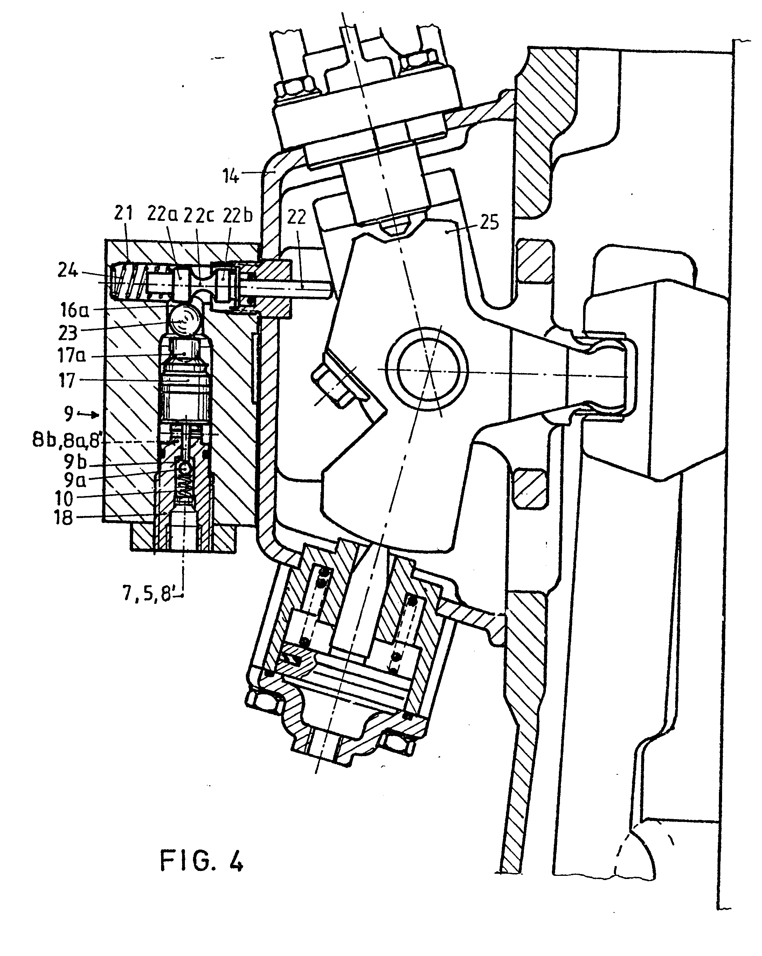

In the example shown in Fig. 4, such location is selected on top of the cover 14 of the gear-shift mechanism of the vehicle in question. It will be understood that such location is rather remote from the location of the proper tilting device, where the remainder of the hydraulic components (1 through 7 and 1-7 and 13 respectively) may be assembled together in a rather compact manner.

In the example of Fig. 2 the necessary connection between said two locations require two pressure ducts, viz. a section connected to duct 5' and a second section, connected to duct 7. In the example of Fig. 3, however, only one pressure duct suffices to constitute the interconnection of the two locations, viz. a connecting duct between the shuttle valve 13 and the auxiliary valve 9. Consequently the risk for pressure duct leakage is minimized in the alternative according to Fig. 3.

Turning back to Fig. 4 the auxiliary valve 9 has a housing 15 comprising a central bore 16, in which a piston member 17 is slidingly mounted. The lower end of the bore 16 is closed by an insert 18, adapted to be connected to either the duct 7 of Fig. 1, or the duct 5 in Fig. 2 or the duct 8' in Fig. 3.

The valve housing 15 further comprises a first opening 19 merging into the bore 16 and being adapted to be connected to the reservoir 2 via the duct 8a, 5 and 8" in Fig. 1, 2 and 3 respectively.

A second opening also merging into said central bore 16, is indicated at 20 and is adapted to be connected to the parking brake air system of the vehicle.

The insert 18 houses a ball valve 9a and a spring 10 (corresponding to the spring 10 in Fig. 1-3) tends to move the ball valve 9a into its seat 9b so as to close off the connection to the reservoir 2 via said -econd opening 20.

A cross bore 21 is provided in the upper part of the valve housing 15 and is connected with the central bore 16 through a reduced portion 16a of the latter.

A pin 22 is slidingly mounted in said cross bore 21 and extends on the right side beyond the valve housing 15 into the space within the cover 14. The pin 22 has two collar portions 22a and 22b, adapted to cooperate with a thrust ball 23, located in the reduced bore portion 16a. A spring 24 in the left hand portion of the cross bore 21 acts on the collar portion 22a and tends to move the pin 22 outwards into the space within the gear box cover 14.

The pin 22 cooperates with the gear selector fork 25 and more specifically functions to sense the angular portion of the latter. In the position shown in Fig. 4 the fork 25 is taking, e.g. its "first gear engaged" position. In this position the pin 22 is pushed outwardly with its collar portion 22a engaging the thrust ball 23 and pushing the latter downwardly into the reduced bore portion 16a and into contact with an upper reduced portion 17a of the piston 17. The latter, in turn, is pused into its lowermost position abutting the upper end of the insert, thereby moving the ball valve 9a off its seat 9b through the intermediary of a needle like element 17b, sothat the connection between ducts 7, 5, 8' and 8a, 8b, 8" is open. In this position, which is to be considered as the result of a positioned mechanical signal 11 produced by the sensor pin 22, any fluid supplied by the pump may flow through either of the duct 7, 5, 8' via the open valve 9b and either of the ducts 8a, 8b, 8" back to the reservoir 2.

When now the selector fork 25 is moved to its neutral undangerous position, the sensor pin 22 will be moved against the action of spring 24 into a mid position, the two collar portions 22a and 22b facing the thrust ball 23, sothat the latter is permitted to be moved upwardly into the escaping gap between the two collar portions under the action of spring 10. The latter action, which involves the closing of ball valve 9a, cannot take place, however, when the parking brake is in its inoperative position. In such an inoperative and (for tilting purposes) dangerous position there will be air pressure at opening 17a, due as a result of which the pilot piston 17 is kept in its lower position and keeps the ball valve 9a open.

Thus the ball valve 9a is allowed to close only after the air pressure at opening 17a is relieved by pulling the parking brake.

It will be clear that a movement of the gear selector fork 25 to any other "gear engaged" position may result in pushing the ball 23 downwards and opening of the ball valve 9a.

It will also be clear, that during driving of the vehicle the selector fork 25 will be moved constantly to engage the various gears and that consequently the sensor pin 22 will also be reciprocating constantly. Such reciprocating movement of the sensor pin 22 under driving conditions, however, is taking place without any resistive force by the pilot-piston and thrust ball assembly 17, 23, because there is air pressure at opening 17a which keeps the piston in its lower position.

# C L A I M S

1.      A device for controlling the tilting movement of a driver's cab on a vehicle, comprising a hydraulic circuit including a source of hydraulic fluid, hydraulic pump means, a hydraulic control valve and at least one hydraulic piston, cylinder device, the latter having its end pivotally connected to the driver's cab and the vehicle chassis respectively, characterized in that a relief duct is connected to at least one of the ducts which connect the opposite ends of the piston-cylinder device to the control valve, said duct being the one which is connected with the hydraulic pump when the control valve is in its tilting position, a valve in said relief duct cooperating with means adapted to sense the position of the gear box and/or the parking brake, in such a way, that said valve will be closed only in one or more selected positions of the gear box and/or when the parking brake is in a determined position.

2.      A device according to claim 1, in which the various hydraulic components are put together to form a regenerative circuit, characterized in that said relief duct (8a) connects the upper end of the piston-cylinder device directly to the source of hydraulic fluid. (Fig. 1).

3.      A device according to claim 1,in which the various hydraulic components are put together to form a hydraulic circuit of the conventional type, characterized in that said relief duct (8b) interconnects the two ducts leading from the control valve to the opposite ends of the piston-cylinder device. (Fig. 2).

4.      A device according to claim 1, in which the various hydraulic components are put together to form a hydraulic circuit of the conventional type, characterized in that the opposite ends of the piston-cylinder device are connected by an auxiliary duct (8') and that said relief duct (8") forms a branch of said auxiliary duct which leads to the source of hydraulic fluid, a shuttle valve being provided at the branching point so as to block the flow of fluid through said auxiliary duct under tilting conditions.

0174396

FIG. 1

FIG. 2

FIG. 3

FIG. 4

European Patent Office

**EUROPEAN SEARCH REPORT**

Application number

EP 84 20 1310

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | US-A-3 695 710 (CRESCI et al.) * Column 1, line 38 - column 2, line 13; figures 1,2 * | 1,3 | B 62 D 33/06 |
| A,D | US-A-4 440 252 (STEINECKE et al.) * Column 2, line 49 - column 4, line 8; figures 1,2 * | 1,3 | |
| A | GB-A-2 121 114 (WEBER) * Page 2, lines 66-86; figure * | 1 | |

TECHNICAL FIELDS SEARCHED (Int. Cl 4)

B 62 D 33/00
B 60 P 1/00

The present search report has been drawn up for all claims

| Place of search | Date of completion of the search | Examiner |
|---|---|---|
| THE HAGUE | 29-04-1985 | OSBORNE J. |